# EUROPÄISCHE PATENTSCHRIFT

(11) **EP 4 627 254 B1**
(45) Veröffentlichungstag und Bekanntmachung des Hinweises auf die Patenterteilung: **21.10.2026**
(21) Anmeldenummer: 23821489.4
(22) Anmeldetag: 23.11.2023
(51) Int. Cl.: F17C 13/06, F16J 13/00, F16L 15/00

(54) **ABSCHLUSSVORRICHTUNG EINER FASERVERBUNDWERKSTOFFSTRUKTUR**
TERMINATING DEVICE OF A FIBRE COMPOSITE MATERIAL STRUCTURE
DISPOSITIF D'EXTRÉMITÉ D'UNE STRUCTURE EN MATÉRIAU COMPOSITE RENFORCÉ PAR DES FIBRES

(30) Priorität: 01.12.2022 DE 102022131917
(43) Veröffentlichungstag der Anmeldung: 08.10.2025
(73) Patentinhaber: Leibniz-Institut für Verbundwerkstoffe GmbH, 67663 Kaiserslautern (DE); Hochschule Kaiserslautern, 67659 Kaiserslautern (DE)
(72) Erfinder: MAGIN, Michael, 66822 Lebach (DE); PFAFF, Thomas, 66892 Bruchmühlbach-Miesau (DE); SCHMITT, Uwe, 67663 Kaiserslautern (DE); BLASS, Ulrich, 67583 Guntersblum (DE); MOTSCH-EICHMANN, Nicole, 66578 Schiffweiler (DE); HÜPPAUFF, Jannis, 70563 Stuttgart (DE)
(74) Vertreter: Patentanwaltskanzlei Vièl & Wieske PartGmbB
(86) Internationale Anmeldenummer: PCT/DE2023/100913
(87) Internationale Veröffentlichungsnummer: WO 2024/114861

(56) Entgegenhaltungen:
- EP-A1- 3 346 178
- EP-A2- 0 082 021
- DE-A1- 102009 014 057
- RU-C1- 2 410 594
- US-A1- 2018 299 067

## Beschreibung

Die vorliegende Erfindung betrifft eine Abschlussvorrichtung einer Faserverbundwerkstoffstruktur, wobei die Abschlussvorrichtung einen Faserverbundwerkstoff-Verbindungsabschnitt zur Verbindung einer rohrförmigen Faserverbundwerkstoffstruktur mit einer Anschlusseinrichtung der Abschlussvorrichtung aufweist, wobei der Verbindungsabschnitt in seinem Inneren wenigstens ein Faserumlenkelement aufweist, wobei der Verlauf der Langfasern aus der Faserverbundwerkstoffstruktur der Form eines Faserumlenkabschnitts des wenigstens einen Faserumlenkelements folgt, sodass deren Faserrichtung an dem Faserumlenkabschnitt umgelenkt ist, und wobei die Langfasern, die das Faserumlenkelement, dem sie jeweils zugeordnet sind, nicht vollständig umschlingen, wobei das wenigstens eine Faserumlenkelement aus Faserverbundwerkstoff besteht.

Zur Verbindung von Faserverbundwerkstoffen mit Bauteilen sind die für metallische Werkstoffe bekannten Verbindungsverfahren oft nicht oder nur unter Verlust von Festigkeit der Verbindung anwendbar. Insbesondere wird die Festigkeit der Verbindung zwischen dem Faserverbundwerkstoff und dem Bauteil durch Trennung und Unterbrechung von Fasern des Faserverbundwerkstoffes reduziert. Zu solchen Unterbrechungen der Fasern kommt es beispielsweise beim Durchbohren oder Beschneiden des Faserverbundwerkstoffes, um das zu verbindende Bauteil durch die Bohrung zu stecken oder an die beschnittenen Kanten anzukleben.

Daher sind Faserverbundwerkstoff-Verbindungsabschnitte, die eine Faserverbundwerkstoffstruktur mit einer Anschlusseinrichtung ohne eine Durchtrennung der Langfasern der Faserverbundstruktur verbinden, bekannt.

Die WO 2016/008858 A1 beschreibt einen Faserverbundwerkstoff-Verbindungsabschnitt zur Verbindung einer Faserverbundwerkstoffstruktur mit einer Anschlusseinrichtung. Der Verbindungsabschnitt weist dabei in seinem Inneren wenigstens ein Faserumlenkelement auf, wobei der Verlauf erster Langfasern aus dem Faserverbundwerkstoffbauteil der Form eines ersten Faserumlenkelements folgt, sodass deren Faserrichtung an dem ersten Faserumlenkabschnitt umgelenkt ist. Der Verlauf zweiter Langfasern aus der Faserverbundwerkstoffstruktur folgt einem zweiten Abschnitt desselben oder eines zweiten Faserumlenkelements, sodass deren Faserrichtung an dem zweiten Faserumlenkabschnitt umgelenkt ist. Die beiden Faserumlenkabschnitte sind räumlich voneinander getrennt, wobei an dem Verbindungsabschnitt ein erster Befestigungsvorsprung und ein zweiter, räumlich von dem ersten getrennter Befestigungsvorsprung jeweils zur Kraftübertragung in den Verbindungsabschnitt ausgebildet sind, und wobei der erste Befestigungsvorsprung durch das erste Faserumlenkelement und die ersten Langfasern und der zweite Befestigungsvorsprung durch das zweite Faserumlenkelement und die zweiten Langfasern ausgebildet ist. Die Langfasern, die aus der Faserverbundwerkstoffstruktur oder dem Faserverbundwerkstoffbauteil zu dem Befestigungsabschnitt verlaufen, werden aufgeteilt und auf mehrere Befestigungsvorsprünge verteilt. So können die auf die Langfasern übertragenen Zug- und Druckkräfte in ein anderes Bauteil übertragen werden. Dabei kann die Faserverbundwerkstoffstruktur als Stab oder Rohr als Zug-Druck-Element ausgebildet sein. Insbesondere kann ein großer Anteil von Fasern mit Faserrichtung in Längsrichtung des Stabes oder Rohres vorgesehen sein.

EP3346178A1 offenbart einen Hochdruckbehälter.

Nachteilig an den bekannten Abschlussvorrichtungen ist, dass bei Krafteinleitung in den Faserverbundwerkstoff-Verbindungsabschnitten eine relativ große Relativbewegung zwischen Anschlusseinrichtung und Faserverbundwerkstoffstruktur erfolgt. Diese Relativbewegung kann bei wiederholter Krafteinleitung zu Verschleiß und im Fall von Drucktanks aus Faserverbundwerkstoff zu Undichtigkeiten führen. Der Erfindung liegt die Aufgabe zugrunde, die bekannten Abschlussvorrichtungen zu optimieren. Insbesondere liegt der Erfindung die Aufgabe zugrunde, die Dichtigkeit von Drucktanks aus Faserverbundwerkstoff zu verbessern.

Die Aufgabe wird bei einer Abschlussvorrichtung gemäß Anspruch 1 dadurch gelöst, dass die Anschlusseinrichtung ein erstes Element und ein zweites Element aufweist, wobei das zweite Element an seinem Außenumfang einen Kontaktbereich mit der Faserverbundwerkstoffstruktur und an seinem Innenumfang einen Kontaktbereich mit dem ersten Element aufweist, wobei beide Elemente im Kontaktbereich zu dem jeweils anderen Element eine konische Form aufweisen.

Faserverbundwerkstoffstruktur kann beispielsweise als Drucktank oder als Stab oder Rohr in Form eines Zug-Druck-Elements ausgebildet sein.

Die Elemente können dabei durch Krafteinwirkung verbunden werden. Dabei wird nach dem Aufbringen des Faserverbundwerkstoffs ein Element mit dem anderen Element verkeilt. Eines der Elemente wird beim Verkeilen in Umfangsrichtung unter Druck gesetzt, während das andere Element zusammen mit den Umfangslagen des Faserverbundwerkstoffes in Umfangsrichtung unter Zugspannung gesetzt wird.

Bei der Belastung der Abschlussvorrichtung durch eine Zugkraft zwischen der Faserverbundwerkstoffstruktur und der Anschlusseinrichtung, beispielsweise bei einer als Drucktank ausgebildeten Faserverbundwerkstoffstruktur, beträgt der Winkel des Konus vorteilhafterweise zwischen 1° und 10°, bevorzugt zwischen 3° und 7° und besonders bevorzugt zwischen 4° und 6°. Im Fall der Belastung der Abschlussvorrichtung durch eine Druckkraft zwischen der Faserverbundwerkstoffstruktur und der Anschlusseinrichtung, beispielsweise bei einer als Stab oder Rohr in Form eines Zug-Druck-Elements ausgebildeten Faserverbundwerkstoffstruktur, ist der Winkel des Konus vorteilhafterweise zwischen -1° und -10°, bevorzugt zwischen -3° und -7° und besonders bevorzugt zwischen -4° und -6°. Die Elemente der Anschlusseinrichtung können aus Metall bestehen. Insbesondere können die Elemente rohrförmig ausgestaltet sein und ineinander eingesteckt werden, wobei durch die konische Form im Kontaktbereich der beiden Elemente eine keilförmige Verbindung zwischen den beiden Elementen entsteht. Vorteilhaft sind die beiden Elemente in ihrem Kontaktbereich formkomplementär.

Die Faserverbundwerkstoffstruktur kann als Drucktank ausgebildet sein. Bei dieser Verwendung können 2/3 der Lagen der Faserverbundwerkstoffstruktur aus Umfangslagen und 1/3 der Lagen aus Längslagen bestehen. Insbesondere kann das erste Elemente einen metallischen Dom eines Drucktanks bilden. Der Drucktank kann dabei als Innen- oder Außendrucktank ausgestaltet sein. Insbesondere kann der Drucktank ein H₂-Hochdrucktank zur Verwendung im Bereich der mobilen Anwendungen wie Kraftfahrzeugen, Schiffen, Flugzeugen und der Raumfahrt sein. Dabei kann der Drucktank aus der rohrförmigen Faserverbundwerkstoffstruktur, die über den Faserverbundwerkstoff-Verbindungsabschnitt mit einer Anschlusseinrichtung verbunden ist, bestehen. Zur Verbindung der Faserverbundwerkstoffstruktur mit der Anschlusseinrichtung können die Langfasern aus der Faserverbundwerkstoffstruktur entlang eines Oberflächenabschnitts der Faserumlenkelemente verlaufen. Es muss dabei keine Umwicklung der Faserumlenkelemente durch die Langfasern erfolgen. Der Oberflächenabschnitt bildet zumindest teilweise eine Außenoberfläche des Verbindungsabschnitts. Die Oberflächenabschnitte verlaufen unter einem Winkel zwischen 20° und 60°, besonders bevorzugt 45°, aus der Richtung heraus, die die Langfasern haben, die zu dem Verbindungsabschnitt hin verlaufen. Die Langfasern verlaufen außerdem mit einem Abschnitt an den benachbarten Faserumlenkelementen, wobei die Abschnitte an den benachbarten Faserumlenkelementen ihre Richtung ändern. Nach der Richtungsänderung verlaufen sie entlang der Oberflächen der Faserumlenkelemente. Aufgrund der geänderten Faserrichtung können die Außenflächen der Faserumlenkelemente als Faserumlenkabschnitte für die Fasern verstanden werden. In Bezug auf die Langfasern erfüllen aufgrund der gekrümmten Oberfläche, entlang der die Fasern verlaufen, auch die jeweils benachbarten Faserumlenkelemente die Funktion eines Faserumlenkabschnitts.

Vorteilhaft wird durch die Verwendung von rohrförmigen Faserverbundwerkstoffstrukturen eine Gewichts- und Kostenreduktion im Vergleich zu konventionellen metallischen, aber auch konventionell gewickelten Faserverbundwerkstoff-Drucktanks (Typ 4) erreicht. Diese Gewichts- und Kostenreduktion ist insbesondere im Bereich der H₂-Hochdrucktanks im Bereich der mobilen Anwendungen wie Kraftfahrzeugen, Schiffen, Flugzeugen und der Raumfahrt vorteilhaft.

Die Faserumlenkelemente können als voneinander unabhängige Faserumlenkelemente ausgeführt sein. Alternativ können die Faserumlenkelemente als ein helixförmiges, zusammengehöriges Faserumlenkelement ausgeführt sein.

Vorteilhaft können bei der vorliegenden Erfindung kleinere Durchmesser der rohrförmigen Faserverbundwerkstoffstruktur für den Drucktank erzielt werden. Auf diese Weise können die Drucktanks Durchmesser < 100 mm aufweisen. Beispielsweise ist für konventionell durch das Wickelverfahren hergestellte H₂-Hochdrucktanks der minimale Durchmesser durch das Bossteil bestimmt. Beträgt dieser 100 mm, so kann der Außendurchmesser des Drucktanks nicht weniger als ca. 130 mm betragen, da im Wickelverfahren hergestellte Drucktanks zur Aufnahme der infolge des Überdrucks verursachten Längskräfte ein mit Fasern überwickeltes Bossteil benötigen. So muss das Bossteil neben dem für die Aufnahme des Sicherheitsventils vorgesehenen zylindrischen Abschnitt mit Innengewinde einen ausgeprägten tellerförmigen Abschnitt größeren Durchmessers aufweisen, der letztendlich als Wendezone beim Bewickeln dient und dabei zusätzlich die durch den Innendruck bedingten Längskräfte absorbiert. Diese Funktion der Aufnahme der Längskräfte beim Übergang der Last vom zylinderförmigen Verbundwerkstoffbereich in den oft metallischen Dombereich wird durch die vorliegende Erfindung weitaus kompakter und mit geringeren Spannungskonzentrationen gelöst.

Vorteilhaft können die rohrförmigen Faserverbundwerkstoffstrukturen mit der Anschlusseinrichtung gegenüber konventionell gewickelten Innendrucktanks sowohl durch Innen- als auch durch Außendruck belastet werden. Damit eignen sich diese rohrförmigen Faserverbundwerkstoffstrukturen mit Anschlusseinrichtung auch zur Verwendung als ineinander geschachtelte Hochdrucktanks, wobei der innere Tank gegenüber dem äußeren Tank auch einen geringeren Innendruck aufweisen kann und somit faktisch einen mit Außendruck belasteten Tank darstellt. **In** der Regel weisen diese Hochdrucktanks einen Mindestberstdruck von ca. 1575 bar auf.

Die Faserumlenkelemente können in Richtung der Anschlusseinrichtung jeweils eine vorstehende Spitze aufweisen. Die Langfasern reichen dabei maximal bis zu dieser Spitze, so dass keine vollständige Umwicklung des Faserumlenkelements durch die Langfaser erfolgt. Die Langfasern wechseln nach ihrer Umlenkung auf das Faserumlenkelement nicht noch einmal signifikant die Richtung. Die Oberflächen der Faserumlenkelemente sind zumindest in einem bis in die Nähe der Spitzen reichenden Abschnitt wenigstens näherungsweise eben ausgeführt. Diese ebenen Oberflächen, entlang denen die Langfasern jeweils verlaufen, gehen in der Nähe der Spitzen und nach einer Umlenkung von vorzugsweise 90° in jeweils eine weitere Oberfläche über, die von den Spitzen aus jeweils in Richtung des Inneren des Verbindungsabschnitts verlaufen. Am Ende dieser Oberfläche befindet sich jeweils eine Kerbe, nach der sich die Außenoberfläche des Verbindungsabschnitts im nächsten Faserumlenkelement fortsetzt, soweit es sich nicht um das letzte Faserumlenkelement handelt. Die beiden Oberflächen, die sich an der Spitze berühren, bilden vorzugsweise die Schenkel eines gleichseitigen Dreiecks. Sie bilden eine V-förmige Vertiefung der Anschlusseinrichtung. Die Langfasern gehören jeweils vorzugsweise zu einer eigenen Faserlage. Die Langfasern können dabei in die Außenflächen der Faserumlenkelemente eingebettet sein.

Die Faserverbundwerkstoffstruktur kann auch als Stab oder Rohr in Form eines Zug-Druck-Elements ausgebildet sein. Insbesondere kann ein großer Anteil von Fasern mit Faserrichtung in Längsrichtung des Stabes oder Rohres vorgesehen sein oder auch ausschließlich solche.

Bei dem Aufbringen von Kräften auf den Faserverbundwerkstoff-Verbindungsabschnitt erfolgt eine Relativbewegung zwischen der Faserverbundwerkstoffstruktur und der Anschlusseinrichtung, die zur notwendigen Verpressung der Langfasern führt.

Vorteilhaft kann durch die konische Form der Elemente der Anschlusseinrichtung eine Verkeilung erfolgen, durch die die Elemente der Anschlusseinrichtung nach dem Aufbringen des Faserverbundwerkstoffes eine radiale Vorspannung im Faserverbundwerkstoff erzeugen. Durch diese radiale Vorspannung wird vorteilhaft die notwendige relative Bewegung von Anschlusseinrichtung und Faserverbundwerkstoffstruktur bei der Belastung der Faserverbundwerkstoffstruktur reduziert. Durch das konische Verkeilen der Elemente wird eine radiale Vorspannung der Umfangslagen des Faserverbundwerkstoffs im Bereich der Lasteinleitung erzeugt. Diese Vorspannung führt zu einer Verpressung der Langfasern in den V-förmigen Vertiefungen der Anschlusseinrichtung zwischen den Umfangslagen und den Elementen, ohne dass eine Belastung vorliegen muss. Durch die Verpressung wird beim Aufbringen der Belastung die relative Verschiebung der Anschlusseinrichtung und der Faserverbundwerkstoffstruktur in den Flanken der V-förmigen Vertiefungen der Anschlusseinrichtung minimiert. Vorteilhaft können die zur Verkeilung notwendigen Zugkräfte im Fall eines Drucktanks durch das Aufbringen eines Innendrucks erzeugt werden. Alternativ kann die Verkeilung der Elemente thermisch erfolgen. Dabei wird beispielsweise das innere der beiden Elemente in einem gekühlten Zustand in das äußere Element eingesteckt. Bei der anschließenden Ausdehnung verkeilen die beiden Elemente, wobei eine Vorspannung auf den Faserverbundwerkstoff-Verbindungsabschnitt ausgeübt wird. Des Weiteren kann die zur Verkeilung notwendige Kraft in Rohrlängsrichtung auch konventionell durch eine Zug- oder Druckvorrichtung aufgebracht werden. Auch eine Kombination aus den vorgenannten Verfahren ist denkbar. Vorteilhaft kann die Dichtigkeit eines Drucktanks durch die Vorspannung mittels des Verkeilens der beiden Elemente erhöht werden.

Vorteilhaft können die Faserverbundwerkstoffstruktur und die Anschlusseinrichtung ohne Klebung verbunden werden. Die Kraftübertragung von Zug- und Druckkräften erfolgt durch Formschluss der Anschlusseinrichtung mit den Umlenkelementen und den Langfasern der Faserverbundwerkstoffstruktur. Somit kommt es bei Temperaturänderungen nicht zu Verspannungen. Vorteilhaft werden zur Befestigung der Anschlusseinrichtung keine Fasern unterbrochen. Eine solche Unterbrechung von Fasern kann sich negativ auf die Festigkeit der Faserverbundwerkstoffstruktur auswirken. Auch Spannungskorrosion tritt infolge fehlender Durchbrüche von Verbindungselementen wie Bolzen oder Schrauben nicht auf. Der Einsatz unterschiedlicher Werkstoffe mit unterschiedlichen Temperaturausdehnungskoeffizienten führt selbst in Folge großer Temperaturdifferenzen nicht zu Verspannungen in der Krafteinleitung zwischen der rohrförmigen Faserverbundwerkstoffstruktur und der Anschlusseinrichtung, da keine feste Verbindung, wie beispielsweise bei einer Klebung, vorhanden ist. Aus diesem Grund ist der Drucktank auch für kryogene Anwendungen, beispielsweise der kryogenen Hochdruckspeicherung, geeignet. Beispielsweise kann der Drucktank als doppelwandiger Tank mit kryogenem Innentank, beispielsweise für flüssiges H₂ und gasförmiges H₂ im Außentank ausgestaltet sein. Kryogene Tanks sind in der Regel durch sehr aufwendige Vakuumdämmschichten gegen Erwärmung des kryogenen Inhalts geschützt. Wird der kryogene Inhalt, beispielsweise H₂, wärmer als 20K, so muss ein Teil des Inhalts abgeblasen werden, um den Restinhalt wieder herunterzukühlen. Dieses Abblasen könnte dann bei einem doppelwandigen Außendruck-/Innendrucktank vom inneren in den äußeren Tank passieren und dort als gasförmiges H₂ weiter zur Verfügung stehen.

Eine weitere Ausgestaltung der Erfindung besteht darin, dass das erste Element und das zweite Element durch Selbsthemmung verbindbar sind.

Die Elemente können dabei durch Krafteinwirkung verbunden werden. Dabei wird nach dem Aufbringen des Faserverbundwerkstoffs ein Element mit dem anderen Element verkeilt, wobei sie durch Selbsthemmung blockieren. Eines der Elemente wird dabei in Umfangsrichtung unter Druck gesetzt, während das andere Element zusammen mit den Umfangslagen des Faserverbundwerkstoffes in Umfangsrichtung unter Zugspannung gesetzt wird. Die Selbsthemmung tritt dabei bei entsprechender Wahl des Winkels des Konus und Wahl der Reibungskoeffizienten, beispielsweise durch Bearbeitung der Oberflächen oder der Wahl der Materialien der beiden Elemente im Kontaktbereich, ein.

Neben der Materialwahl und Oberflächenbeschaffenheit der beiden Elemente im Kontaktbereich kann der Reibungskoeffizient zwischen den beiden Elementen beispielsweise durch Zugabe von Material in den Kontaktbereich zwischen die beiden Elemente gezielt eingestellt werden. Bei dem Material kann es sich um Partikel handeln, die härter als das Material der beiden Elemente sind. Das Material kann Partikel großer Härte, beispielsweise Siliciumcarbid oder Korund, aufweisen. Bei dem zugegebenen Material kann es sich beispielsweise um eine Carbon-Montagepaste handeln. Bei der Verwendung von Elementen aus Aluminium kann die Montagepaste beispielsweise Siliziumpartikel enthalten. Bei dem Material kann es sich auch um Gummi handeln. Vorteilhaft kann durch die gezielte Einstellung der Reibungskoeffizienten eine zu weite relative axiale Bewegung der beiden Elemente verhindert werden, um insbesondere ein "Durchrutschen" über den gewünschten Punkt hinaus zu verhindern.

Vorteilhaft werden die beiden Elemente durch die Selbsthemmung kraftschlüssig miteinander fixiert, so dass auch bei Wegfall der äußeren Belastung auf die Abschlussvorrichtung, die beiden Elemente verbunden bleiben.

Eine weitere Ausgestaltung der Erfindung sieht vor, dass die beiden Elemente im Kontaktbereich der beiden Elemente ein konisches Gewinde aufweisen.

Vorteilhaft kann die Vorspannung durch Eindrehen der Elemente ineinander aufgebaut werden. Durch das Gewinde können gleichzeitig Zug- und Druckkräfte übertragen werden. Dies erlaubt auch Biegekräfte, was besonders vorteilhaft bei der Verwendung der Abschlussvorrichtung zur Verbindung von Stäben oder Rohren in Form von Zug-Druck-Elementen ist. Der Konus des konischen Gewindes kann dabei einen positiven oder negativen Winkel aufweisen.

Neben Zug- und Druckkräften können durch die Abschlussvorrichtung auch Torsionskräfte übertragen werden. Beispielsweise kann durch die Abschlussvorrichtung ein Faserverbundwerkstoff-Torsionsrohr an- und/oder abtriebsseitig verbunden werden. Dabei weist das Faserverbundwerkstoff-Torsionsrohr vorzugsweise Lagen in einer +-45°-Ausrichtung zur Achsrichtung zur optimalen Torsionsmomentübertragung auf. Dabei können das erste und das zweite Element im Kontaktbereich eine konische Form oder ein konisches Gewinde aufweisen. Im Fall eines konischen Gewindes können vorteilhaft die Reibverhältnisse sowohl im konischen Gewinde als auchin den V-Nuten derart zueinander eingestellt werden, dass bei gesteigertem Drehmoment (in nur eine Richtung) die Vorspannung auf die Lagen in +-45°-Ausrichtung über die Umfangslagen ebenfalls gesteigert oder die Vorspannung begrenzt wird, so dass es zu einem "Durchrutschen" der Faserverbundwerkstoffstruktur in den ringförmigen V-Nuten kommt, bevor die Umfangslagen reißen können. Besonders vorteilhaft können dabei Torsionsspitzen durch ein "Durchrutschen" der Faserverbundwerkstoffstruktur abgefangen werden.

Bei der Verwendung der Faserverbundwerkstoffstruktur mit Anschlusseinrichtung als Drucktank (wobei der Drucktank hier synonym auch für einen Hydraulikzylinder stehen kann) ist es vorteilhaft, dass die Faserverbundwerkstoffstruktur einen Liner aufweist, wobei der Liner zumindest teilweise zwischen der Faserverbundwerkstoffstruktur und mindestens einem Element angeordnet ist. Bei dieser Verwendung sind in der Regel ca. 2/3 der Lagen Umfangslagen und 1/3 der Lagen Längslagen.

Um die Dichtheit der Drucktanks aus rohrförmigen Faserverbundwerkstoffstrukturen gegen das Austreten oder das Eintreten von Medien, beispielsweise H₂ nach außen, zu gewährleisten, können die rohrförmigen Faserverbundwerkstoffstrukturen und die Anschlusseinrichtung mit einem Liner versehen werden. Dieser Liner kann je nach Druckrichtung innen oder außen auf die rohrförmigen Faserverbundwerkstoffstrukturen aufgebracht werden. Der Liner kann ein thermoplastischer Liner, beispielsweise aus HDPE oder PA, sein. Er kann auch aus Glas, Silikon oder Metallen bestehen. Vorteilhaft wird durch den Liner die Mediendichtheit der Faserverbundwerkstoffstruktur selbst dann gewährleistet, wenn Zwischenfaserbrüche in der Faserverbundwerkstoffstruktur auftreten.

Ein innenliegender Liner kann in Verbindung mit den Anschlusseinrichtungen den Rohling für die Fertigung eines Innendrucktanks bilden. Auf diese Weise wird ein zusätzlicher Kern bei der Fertigung vermieden. Der Liner, der später mediendicht mit der Anschlusseinrichtung verbunden ist, kann im Verlauf der Fertigung auf Überdruck gesetzt werden, um so als Kern für die Wicklung der rohrförmigen Faserverbundwerkstoffstruktur zu dienen. Die Höhe des Drucks kann dabei den jeweiligen Erfordernissen angepasst werden. Eine zusätzliche Stabilisierung des Rohlings (Liner und Domkappen) während der Fertigung kann dadurch erreicht werden, dass der Liner mit einem stabilisierenden Medium (Styropor, Sand, Hohlkugeln etc.) geflutet wird, bis die textile Struktur des Tanks stabil ist. Die Anschlusseinrichtung kann eine Domkappe oder einen Flansch aufweisen.

Am Ende des rohrförmigen Liners wird die Anschlusseinrichtung des Drucktanks in die Faserverbundwerkstoffstruktur eingeschoben. Diese Überlappstelle bildet eine potenzielle Undichtigkeitsstelle. Es kommt während des Aufbringens des Innendrucks zu einer axialen Relativbewegung zwischen der Faserverbundwerkstoffstruktur und der Anschlusseinrichtung. Gleichzeitig wird der Durchmesser des Liners durch den Innendruck vergrößert. Der Durchmesser des inneren Teils der Anschlusseinrichtung (Konusfläche oder keilförmige Fläche auf der Außenseite) wird durch das Verkeilen (also die relative axiale Bewegung gegenüber dem äußeren Teil der Anschlusseinrichtung mit der Konusfläche oder der keilförmigen Fläche innen) in Umfangsrichtung unter Druck gesetzt. Diese Druckvorspannung kann während der Druckbeaufschlagung des Drucktanks dazu benutzt werden, um dem sich im Durchmesser vergrößerndem Liner zu folgen. Vorteilhaft erhöht dies die Dichtigkeit des Drucktanks.

Dabei ist es zweckmäßig, dass der nicht verkeilte Zustand der beiden Elemente durch eine Markierung sichtbar ist.

Das Verkeilen der beiden Elemente kann durch eine Markierung sichtbar gemacht werden. Beispielsweise kann ein Element zumindest teilweise mit einer Signalfarbe markiert werden, die durch das Verkeilen und die damit verbundene Relativbewegung der beiden Elemente von einem Element zumindest teilweise verdeckt wird. Auf diese Weise kann durch visuelle Inspektion ermittelt werden, ob ein vollständiges Verkeilen der beiden Elemente erfolgt ist und diese sicher verbunden sind.

Die Markierung kann auch in einer sichtbaren Lücke oder eines Spalts zwischen den beiden Elementen bestehen. Vorteilhaft kann durch die Lücke im nicht verkeilten Zustand sichtbar gemacht werden, ob bereits eine Vorspannung auf den Faserverbundwerkstoff-Verbindungsabschnitt aufgebracht wurde. Insbesondere im Fall von Drucktanks kann sichtbar gemacht werden, ob der Drucktank bereits einen Prüfdruck-Test absolviert hat. Bei dem Prüfdruck-Test wird ein Prüfdruck von beispielsweise 1000 bar Innendruck im Drucktank aufgebaut. Die durch diesen Prüfdruck auf den Faserverbundwerkstoff-Verbindungsabschnitt wirkenden Zugkräfte bewirken eine Verkeilung der beiden Elemente. Die Verkeilung bleibt dabei im Fall der Selbsthemmung nach dem Abbau des Innendrucks erhalten, wobei diese an dem Abstand der Elemente erkennbar ist.

Es ist zur Erfindung gehörig, dass die Abschlussvorrichtung einen Dichtungsring aufweist.

Der Dichtungsring kann dabei flach, rund, oval, rechteckig oder freigeformt ausgestaltet sein und besteht vorzugsweise aus einem Elastomer oder Thermoplast. Der Dichtungsring kann zwischen einem Element und dem Faserverbundwerkstoff oder vorzugsweise zwischen einem Liner und einem Element angeordnet sein. Besonders bevorzugt ist der Dichtungsring im Verbindungsbereich der beiden Elemente angeordnet. Vorteilhaft wird durch den Dichtungsring die Dichtigkeit eines Drucktanks/Hydraulikzylinders erhöht.

Eine Ausgestaltung der Erfindung besteht darin, dass die Anschlusseinrichtung ein drittes Element aufweist, wobei das dritte Element lösbar mit dem ersten Element verbindbar ist.

Das dritte Element kann beispielsweise im Fall eines Zug- oder Druckstabes ein Befestigungsmittel oder im Fall eines Drucktanks ein Ventil oder Anschluss zum Verbinden mit zusätzlichen Drucktanks sein. Vorteilhaft kann das dritte Element ohne Aufheben der Vorspannung durch das erste und zweite Element ausgetauscht werden. Die Verbindung des dritten Elements mit dem ersten Element kann durch ein Gewinde erfolgen. Alternativ sind die beiden Elemente zusammengeführt und verklebt oder als ein Bauteil ausgestaltet

Eine weitere Ausgestaltung der Erfindung besteht darin, dass das dritte Element die Domkappe eines Drucktanks ist.

Schließlich ist es zur Erfindung gehörig, dass das dritte Element einen Flansch aufweist.

Nachfolgend werden Ausführungsformen der Vorrichtung zur erfindungsgemäßen Verwendung anhand von Zeichnungen näher erläutert.

Es zeigen
- Fig. 1: eine perspektivische Ansicht einer erfindungsgemäßen Abschlussvorrichtung im nicht verkeilten Zustand,
- Fig. 2: einen Querschnitt einer erfindungsgemäßen Abschlussvorrichtung im nicht verkeilten Zustand,
- Fig. 3: eine perspektivische Ansicht einer erfindungsgemäßen Abschlussvorrichtung im verkeilten Zustand,
- Fig. 4: einen Querschnitt einer erfindungsgemäßen Abschlussvorrichtung im verkeilten Zustand,
- Fig. 5: einen perspektivischen Querschnitt einer erfindungsgemäßen Abschlussvorrichtung im nicht verkeilten Zustand,
- Fig. 6: einen perspektivischen Querschnitt einer erfindungsgemäßen Abschlussvorrichtung im verkeilten Zustand,
- Fig. 7: einen Querschnitt einer erfindungsgemäßen Abschlussvorrichtung im nicht verkeilten Zustand,
- Fig. 8: eine Detailansicht einer erfindungsgemäßen Abschlussvorrichtung im nicht verkeilten Zustand,
- Fig. 9: einen Querschnitt einer erfindungsgemäßen Abschlussvorrichtung im verkeilten Zustand,
- Fig. 10: eine Detailansicht einer erfindungsgemäßen Abschlussvorrichtung im verkeilten Zustand,
- Fig. 11: einen Querschnitt einer erfindungsgemäßen Abschlussvorrichtung im nicht verkeilten Zustand,
- Fig. 12: einen Querschnitt einer erfindungsgemäßen Abschlussvorrichtung im verkeilten Zustand,
- Fig. 13: einen perspektivischen Querschnitt der erfindungsgemäßen Abschlussvorrichtung aus Figur 11,
- Fig. 14: einen perspektivischen Querschnitt der erfindungsgemäßen Abschlussvorrichtung aus Figur 12,
- Fig. 15: einen Querschnitt einer erfindungsgemäßen Abschlussvorrichtung im nicht verkeilten Zustand,
- Fig. 16: einen Querschnitt einer erfindungsgemäßen Abschlussvorrichtung im verkeilten Zustand,
- Fig. 17: einen Querschnitt einer erfindungsgemäßen Abschlussvorrichtung im nicht verkeilten Zustand,
- Fig. 18: einen Querschnitt einer erfindungsgemäßen Abschlussvorrichtung im verkeilten Zustand,
- Fig. 19: einen weiteren Faserverbundwerkstoff-Verbindungsabschnitt einer erfindungsgemäßen Abschlussvorrichtung im Querschnitt,
- Fig. 20: einen weiteren Faserverbundwerkstoff-Verbindungsabschnitt einer erfindungsgemäßen Abschlussvorrichtung im Querschnitt,
- Fig. 21: einen Querschnitt einer erfindungsgemäßen Abschlussvorrichtung,
- Fig. 22: einen perspektivischen Querschnitt einer erfindungsgemäßen Abschlussvorrichtung,
- Fig. 23: einen Querschnitt einer erfindungsgemäßen Abschlussvorrichtung,
- Fig. 24: einen perspektivischen Querschnitt einer erfindungsgemäßen Abschlussvorrichtung.

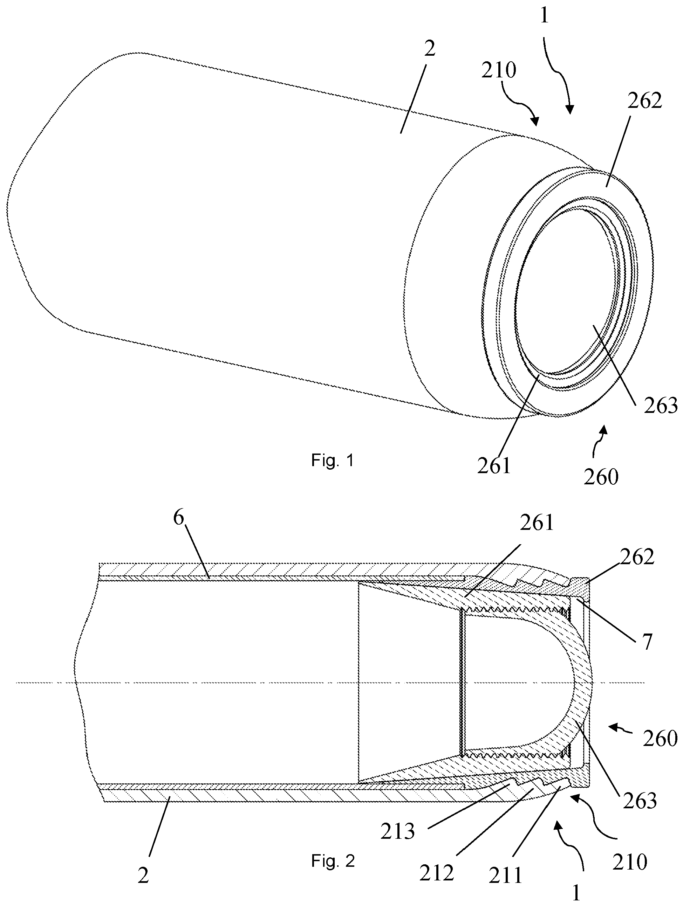

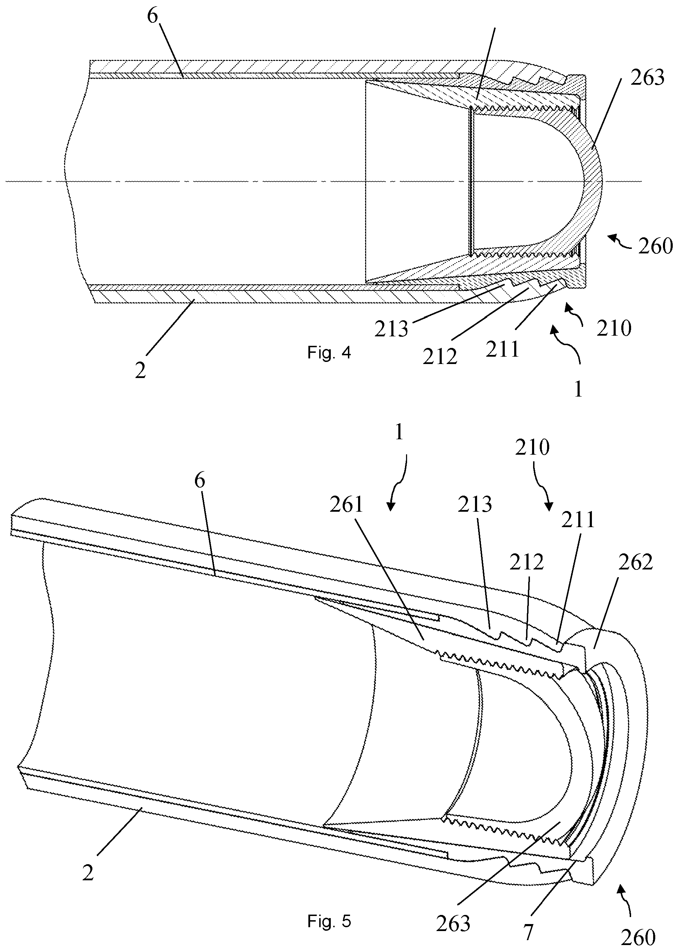

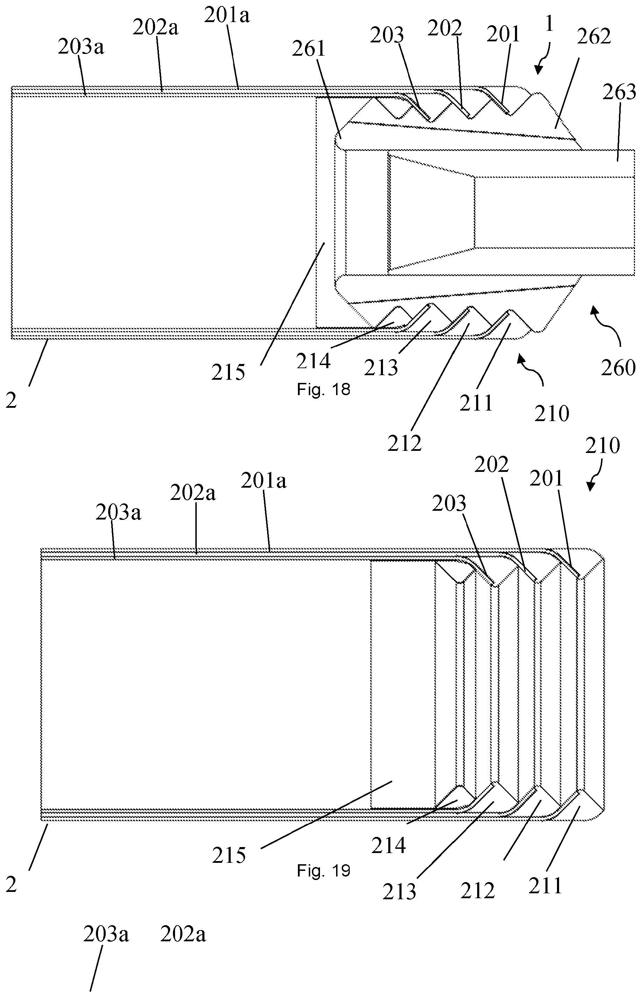

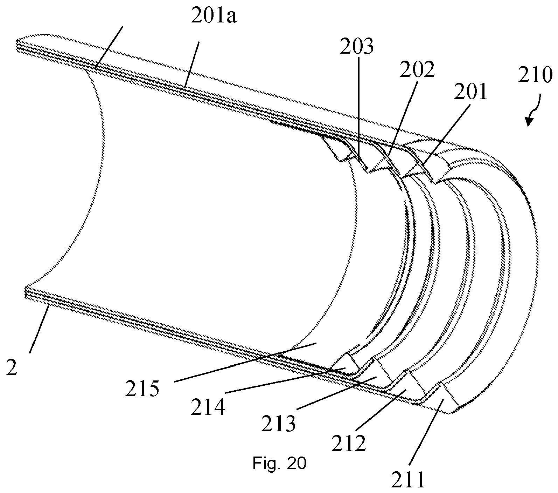

Die Figuren 1, 2 und 5 zeigen eine erfindungsgemäße Abschlussvorrichtung 1 im nicht verkeilten Zustand. Die Abschlussvorrichtung 1 weist einen Verbindungsabschnitt 210, der nach einem der folgenden Ausführungsformen ausgestaltet sein kann, und eine Anschlusseinrichtung 260 auf. Durch den Verbindungsabschnitt 210 mit den Faserumlenkelementen 211, 212 und 213 wird die Faserverbundwerkstoffstruktur 2 mit der Anschlusseinrichtung 260 verbunden. Insbesondere kann der Verbindungsabschnitt 210 gemäß der Darstellung in den Figuren 19 und 20 ausgestaltet sein.

Die Anschlusseinrichtung 260 umfasst ein erstes Element 261 und ein zweites Element 262, wobei das zweite Element 262 an seinem Außenumfang einen Kontaktbereich mit der Faserverbundwerkstoffstruktur 2 und an seinem Innenumfang einen Kontaktbereich mit dem ersten Element 261 aufweist, wobei jedes der Elemente 261, 262 im Kontaktbereich zum jeweils anderen Element 262, 261 eine konische Form aufweist. Im nicht verkeilten Zustand sind das erste Element 261 und das zweite Element 262 nicht miteinander verkeilt, wodurch sie noch nicht durch Selbsthemmung relativ zueinander festgelegt sind. Das zweite Element 262 ist zu der dem Verbindungsabschnitt 210 zugewandten Außenoberfläche formkomplementär. Durch die konische Form der beiden sich nach dem Aufbringen des Faserverbundwerkstoffes in Kontakt befindlichen Flächen der beiden Elemente 261 und 262 der Anschlusseinrichtung 260 erfolgt beim relativen axialen Verschieben der Elemente 261 und 262 zueinander eine Verkeilung, durch die die beiden Elemente 261 und 262 der Anschlusseinrichtung 260 eine radiale Vorspannung im Faserverbundwerkstoff erzeugen. Durch diese radiale Vorspannung wird die notwendige relative Bewegung von Anschlusseinrichtung 260 und Faserverbundwerkstoffstruktur 2 bei axialer Belastung der Faserverbundwerkstoffstruktur 2 und der Anschlusseinrichtung 260 reduziert.

Durch das konische Verkeilen der Elemente wird eine radiale Vorspannung der Umfangslagen des Faserverbundwerkstoffs im Bereich der Lasteinleitung erzeugt. Diese Vorspannung führt zu einer Verpressung der Langfasern in den V-förmigen Vertiefungen der Anschlusseinrichtung 260 zwischen den Umfangslagen und dem zweiten Element 262, ohne dass eine Belastung vorliegen muss. Durch die Verpressung wird beim Aufbringen der Belastung die relative Verschiebung der Anschlusseinrichtung 260 und der Faserverbundwerkstoffstruktur 2 in den Flanken der V-förmigen Vertiefungen der Anschlusseinrichtung minimiert. Das Verkeilen der beiden Elemente 261 und 262 kann dabei im Fall eines Drucktanks durch den Innendruck des Drucktanks erreicht werden. In das erste Element 261 ist ein drittes Element 263 eingeschraubt. Dieses dritte Element 263 ist hier als Domkappe eines Drucktanks ausgestaltet.

Die Faserverbundwerkstoffstruktur 2 weist einen Liner 6 auf, wobei der Liner 6 zumindest teilweise zwischen der Faserverbundwerkstoffstruktur 2 und dem zweiten Element 262 angeordnet ist.

Die Anschlusseinrichtung 260 weist an ihrem Ende eine Markierung 7 in Form eines Spalts zwischen dem ersten Element 261 und dem zweiten Element 262 auf. Anhand der Markierung kann erkannt werden, ob die beiden Elemente 261 und 262 bereits durch Verkeilen verbunden sind. Im Fall eines Drucktanks kann anhand der Markierung 7 erkannt werden, ob der Drucktank bereits mit einem Prüfdruck beaufschlagt wurde. Die Markierung 7 zeigt an, ob eine Selbsthemmung zwischen den beiden Elementen 261 und 262 eingetreten ist.

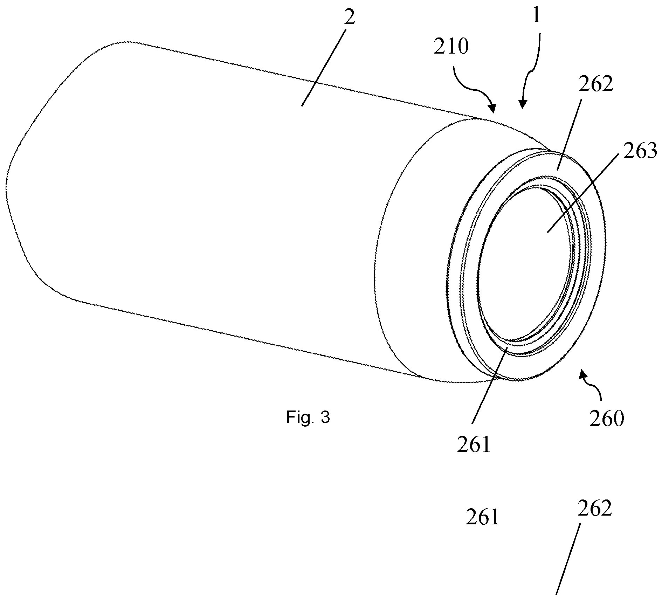

Die Figuren 3, 4 und 6 zeigen die Abschlussvorrichtung 1 aus den Figuren 1, 2 und 5 im verkeilten Zustand. Gleiche Merkmale sind mit gleichen Bezugsziffern bezeichnet. Im Unterschied zu der in den Figuren 1, 2 und 5 gezeigten Abschlussvorrichtung sind die beiden Elemente 261 und 262 der Anschlusseinrichtung 260 verkeilt und es ist, eine fehlende Belastung vorausgesetzt, somit Selbsthemmung eingetreten. Der Spalt am Ende der Anschlusseinrichtung 260 zwischen dem ersten Element 261 und dem zweiten Element 262 ist geschlossen, so dass keine Markierung 7 zu erkennen ist. Alternativ kann die Markierung 7 auch im verkeilten Zustand sichtbar sein oder beide Zustände unterschiedliche Markierungen 7 aufweisen. Auch die Abschlusskante in Element 262, an die im verkeilten Zustand das Element 261 anstößt, muss nicht zwangsläufig vorhanden sein. Die konische Struktur der Fläche kann auch in Element 262, ähnlich wie im Element 261, in einer abgewandelten Ausgestaltung bis nach außen hin weitergeführt sein.

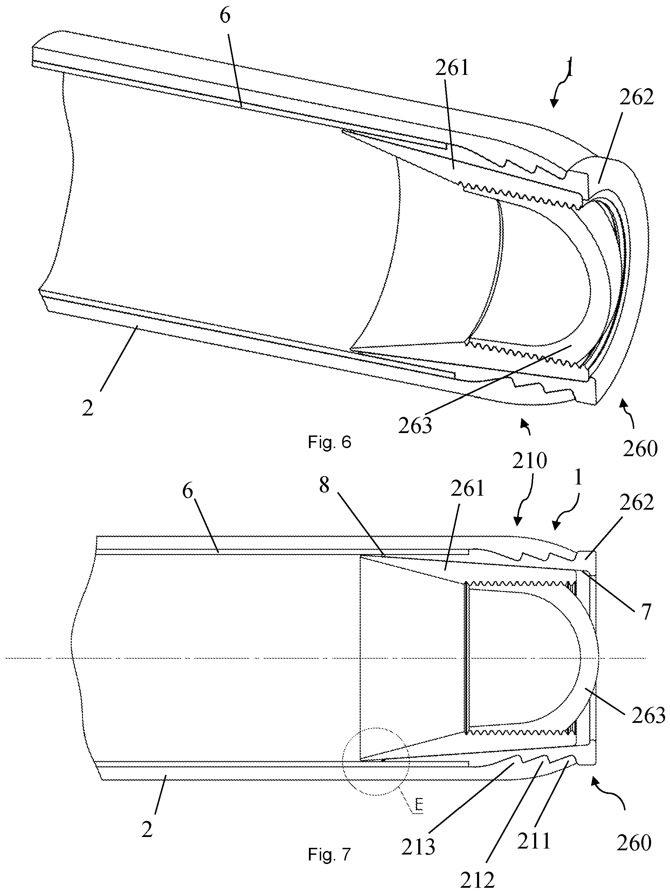

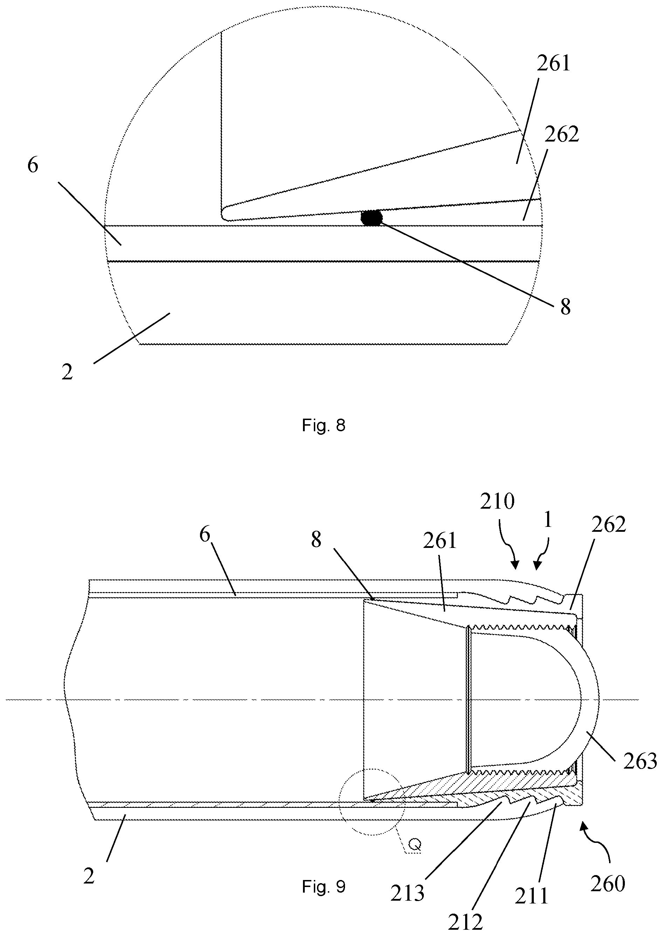

Die Figuren 7 und 8 zeigen eine weitere Ausgestaltung der Abschlussvorrichtung 1 aus den Figuren 1, 2 und 5 im nicht verkeilten Zustand. Gleiche Merkmale sind mit gleichen Bezugsziffern bezeichnet. Im Unterschied zu der in den Figuren 1, 2 und 5 gezeigten Abschlussvorrichtung 1 weist die Abschlussvorrichtung 1 in Figur 7 einen Dichtungsring 8 auf. In Figur 8 ist eine Vergrößerung des Ausschnitts E der Figur 7 gezeigt.

Der Dichtungsring kann dabei flach, rund, oval, rechteckig oder freigeformt ausgestaltet sein und besteht vorzugsweise aus einem Elastomer oder Thermoplast. Der Dichtungsring 8 ist zwischen dem ersten Element 261 und dem Liner 6 angeordnet. Er drückt sich bei Innendruckbelastung des Drucktanks seitlich an das Element 262 und dichtet gleichzeitig nach außen zum Liner 6 und nach innen zum Element 261 ab. Vorteilhaft wird durch den Dichtungsring 8 im Fall eines Drucktanks die Dichtigkeit erhöht.

Das Element 261 kann zumindest in Teilbereichen mit einem Faserverbundwerkstoff verstärkt sein, beispielsweise einem Ring aus Faserverbundwerkstoff, zumindest vorwiegend Umfangslagen, der im am stärksten belasteten Bereich angeordnet ist, um eine plastische Verformung des Elements 261 zu vermeiden.

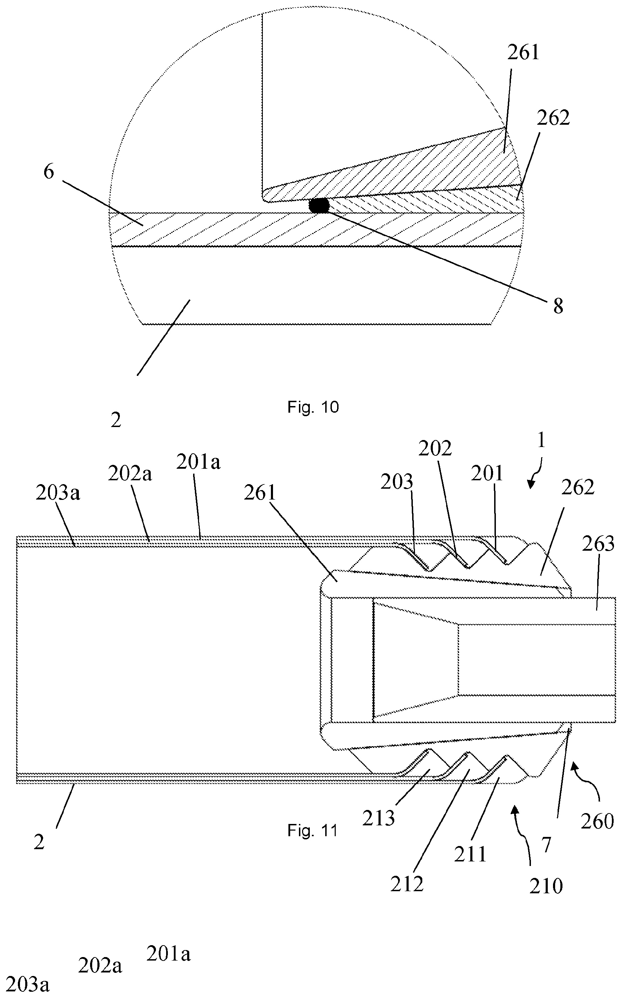

Die Figur 9 zeigt die Ausgestaltung der Abschlussvorrichtung 1 aus der Figur 7 im verkeilten Zustand (im Gegensatz zur Fig. 7 mit Schraffur der Schnittflächen). Gleiche Merkmale sind mit gleichen Bezugsziffern bezeichnet. Im Unterschied zu der in den Figuren 3, 4 und 6 gezeigten Abschlussvorrichtung 1 weist die Abschlussvorrichtung 1 einen Dichtungsring 8 auf. In Figur 10 ist eine Vergrößerung des Ausschnitts Q der Figur 9 gezeigt.

Der Dichtungsring kann dabei flach, rund, oval, rechteckig oder freigeformt ausgestaltet sein und besteht vorzugsweise aus einem Elastomer oder Thermoplast. Der Dichtungsring 8 ist zwischen dem ersten Element 261 und dem Liner 6 angeordnet. Er drückt sich bei Innendruckbelastung des Drucktanks seitlich an das Element 262 und dichtet gleichzeitig nach außen zum Liner 6 und nach innen zum ersten Element 261 ab. Vorteilhaft wird durch den Dichtungsring 8 im Fall eines Drucktanks die Dichtigkeit erhöht.

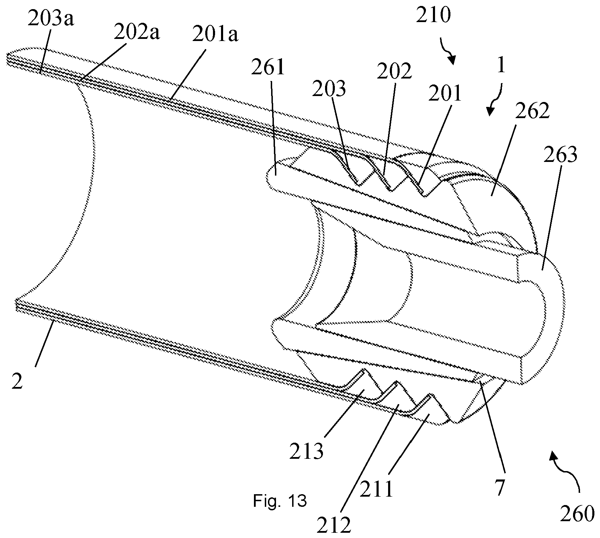

In den Figuren 11 und 13 ist eine weitere Ausgestaltung der Abschlussvorrichtung 1 im nicht verkeilten Zustand dargestellt. Die Abschlussvorrichtung weist einen Verbindungsabschnitt 210, der nach einem der folgenden Ausführungsformen ausgestaltet sein, kann und eine Anschlusseinrichtung 260 auf. Durch den Verbindungsabschnitt 210 mit den Faserumlenkelementen 211, 212 und 213 wird die Faserverbundwerkstoffstruktur 2 mit der Anschlusseinrichtung 260 verbunden. Die Langfasern 201a, 202a und 203a verlaufen außerdem mit einem Abschnitt an den benachbarten Faserumlenkelementen 211, 212 und 213, wobei die Abschnitte der Langfasern 201, 202 und 203 an den Faserumlenkelementen 211, 212 und 213 ihre Richtung ändern.

Die Anschlusseinrichtung 260 umfasst ein erstes Element 261 und ein zweites Element 262, wobei das zweite Element 262 an seinem Außenumfang einen Kontaktbereich mit der Faserverbundwerkstoffstruktur 2 und an seinem Innenumfang einen Kontaktbereich mit dem ersten Element 261 aufweist, wobei jedes der Elemente 261, 262 im Kontaktbereich zum jeweils anderen Element 262, 261 eine konische Form aufweist. Im nicht verkeilten Zustand sind das erste Element 261 und das zweite Element 262 nicht miteinander verkeilt, wodurch sie noch nicht durch Selbsthemmung aneinander befestigt sind. Das zweite Element 262 ist zu der zu dem Verbindungsabschnitt 210 gerichteten Außenoberfläche formkomplementär. Durch die konische Form der beiden sich nach dem Aufbringen des Faserverbundwerkstoffes in Kontakt befindlichen Flächen der beiden Elemente 261 und 262 der Anschlusseinrichtung 260 erfolgt beim relativen axialen Verschieben der Elemente 261 und 262 zueinander eine Verkeilung, durch die die beiden Elemente 261 und 262 der Anschlusseinrichtung 260 eine radiale Vorspannung im Faserverbundwerkstoff erzeugen. Durch diese radiale Vorspannung wird die notwendige relative Bewegung von Anschlusseinrichtung 260 und Faserverbundwerkstoffstruktur 2 bei axialer Belastung der Faserverbundwerkstoffstruktur 2 und der Anschlusseinrichtung 260 reduziert. Durch das konische Verkeilen der Elemente wird eine radiale Vorspannung der Umfangslagen des Faserverbundwerkstoffs im Bereich der Lasteinleitung erzeugt. Diese Vorspannung führt zu einer Verpressung der Langfasern 201a, 202a, 203a in den V-förmigen Vertiefungen der Anschlusseinrichtung 260 zwischen den Umfangslagen und dem zweiten Element 262, ohne dass eine Belastung vorliegen muss. Durch die Verpressung wird beim Aufbringen der Belastung die relative Verschiebung der Anschlusseinrichtung 260 und der Faserverbundwerkstoffstruktur 2 in den Flanken der V-förmigen Vertiefungen der Anschlusseinrichtung minimiert. Das Verkeilen der beiden Elemente 261 und 262 kann dabei im Fall eines Drucktanks durch den Innendruck des Drucktanks erreicht werden. In das erste Element 261 ist ein drittes Element 263 eingesteckt. Dieses dritte Element 263 ist als zylindrischer Anschluss ausgestaltet

Die Anschlusseinrichtung 260 weist an ihrem Ende eine Markierung 7 in Form eines Spalts zwischen dem ersten Element 261 und dem zweiten Element 262 auf. Anhand der Markierung kann erkannt werden, ob die beiden Elemente 261 und 262 bereits durch Verkeilen verbunden sind. Im Fall eines Drucktanks kann anhand der Markierung 7 erkannt werden, ob der Drucktank bereits mit einem Prüfdruck beaufschlagt wurde. Die Markierung 7 zeigt an, ob eine Selbsthemmung zwischen den beiden Elementen 261 und 262 eingetreten ist.

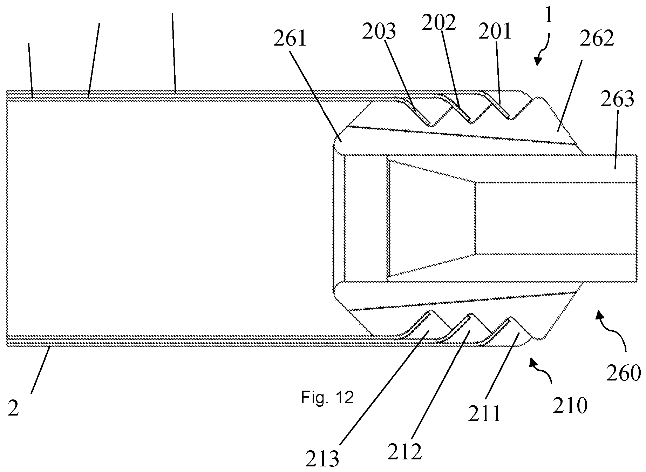

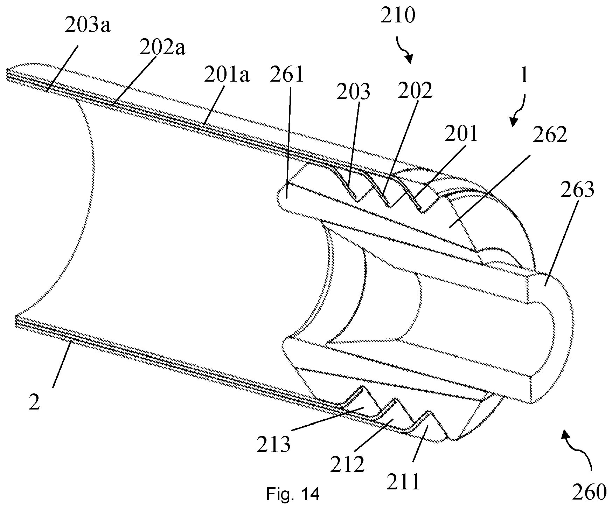

In den Figuren 12 und 14 ist die Abschlussvorrichtung 1 aus den Figuren 11 und 13 im verkeilten Zustand dargestellt. Gleiche Merkmale sind mit gleichen Bezugsziffern bezeichnet.

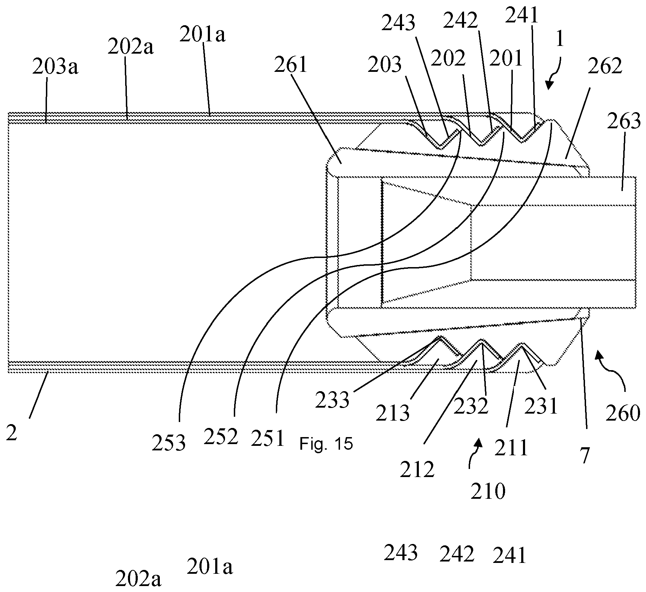

In Figur 15 ist eine weitere Ausgestaltung der Abschlussvorrichtung 1 im nicht verkeilten Zustand dargestellt. Die Abschlussvorrichtung weist einen Verbindungsabschnitt 210, der nach einem der vorangegangenen oder folgenden Ausführungsformen ausgestaltet sein kann und eine Anschlusseinrichtung 260 auf. Durch den Verbindungsabschnitt 210 mit den Faserumlenkelementen 211, 212 und 213 wird die Faserverbundwerkstoffstruktur 2 mit der Anschlusseinrichtung 260 verbunden. Die Langfasern 201a, 202a und 203a verlaufen außerdem mit einem Abschnitt an den benachbarten Faserumlenkelementen 211, 212 und 213, wobei die Abschnitte der Langfasern 201, 202 und 203 an den Faserumlenkelementen 211, 212 und 213 ihre Richtung ändern.

Die Ausführungsform aus Figur 15 unterscheidet sich von der Ausführungsform in Figur 11 dadurch, dass sich die Langfasern 201a, 202a und 203a über die Spitze 231, 232 bzw. 233 hinweg erstrecken und in der schrägen, ebenen Oberfläche 241, 242 bzw. 243 weiterverlaufen. Sie sind in diese Oberfläche 241, 242 bzw. 243 eingebettet. Sie enden am Ende der Oberfläche 241, 242 bzw. 243 in Richtung der Kerbe 251, 252 bzw. 253 oder der Nähe davon. Gegenüber der ersten Ausführungsform ergibt sich der zusätzliche Vorteil, dass die Langfasern 201a, 202a und 203a fester mit den Faserumlenkelementen 211, 212 bzw. 213 verbunden sind. Außerdem sind die Oberflächen 241, 242 bzw. 243 durch die zusätzlichen Fasern fester und können höhere Druckkräfte auf die Anschlusseinrichtung 260 übertragen.

Die Anschlusseinrichtung 260 umfasst ein erstes Element 261 und ein zweites Element 262, wobei das zweite Element 262 an seinem Außenumfang einen Kontaktbereich mit der Faserverbundwerkstoffstruktur 2 und an seinem Innenumfang einen Kontaktbereich mit dem ersten Element 261 aufweist, wobei jedes der Elemente 261, 262 im Kontaktbereich zum jeweils anderen Element 262, 261 eine konische Form aufweist. Im Ausgangszustand sind das erste Element 261 und das zweite Element 262 nicht miteinander verkeilt, wodurch sie noch nicht durch Selbsthemmung aneinander befestigt sind. Das zweite Element 262 ist zu dem Verbindungsabschnitt 210 zugewandten Außenoberfläche formkomplementär. Durch die konische Form der beiden sich nach dem Aufbringen des Faserverbundwerkstoffes in Kontakt befindlichen Flächen der beiden Elemente 261 und 262 der Anschlusseinrichtung 260 erfolgt beim relativen axialen Verschieben der Elemente 261 und 262 zueinander eine Verkeilung, durch die die beiden Elemente 261 und 262 der Anschlusseinrichtung 260 eine radiale Vorspannung im Faserverbundwerkstoff erzeugen. Durch diese radiale Vorspannung wird die notwendige relative Bewegung von Anschlusseinrichtung 260 und Faserverbundwerkstoffstruktur 2 bei axialer Belastung der Faserverbundwerkstoffstruktur 2 und der Anschlusseinrichtung 260 reduziert. Durch das Verkeilen der Elemente wird eine radiale Vorspannung der Umfangslagen des Faserverbundwerkstoffs im Bereich der Lasteinleitung erzeugt. Diese Vorspannung führt zu einer Verpressung der Langfasern 201a, 202a, 203a in den V-förmigen Vertiefungen der Anschlusseinrichtung 260 zwischen den Umfangslagen und dem zweiten Element 262, ohne dass eine Belastung vorliegen muss. Durch die Verpressung wird beim Aufbringen der Belastung die relative Verschiebung der Anschlusseinrichtung 260 und der Faserverbundwerkstoffstruktur 2 in den Flanken der V-förmigen Vertiefungen der Anschlusseinrichtung minimiert. Das Verkeilen der beiden Elemente 261 und 262 kann dabei im Fall eines Drucktanks durch den Innendruck des Drucktanks erreicht werden. Mit dem ersten Element 261 ist ein drittes Element 263 lösbar verbunden. Diese Verbindung kann durch ein Gewinde erfolgen. Alternativ sind die beiden Elemente zusammengeführt und verklebt oder als ein Bauteil ausgestaltet Das dritte Element 263 ist als zylindrischer Anschluss ausgestaltet.

Die Anschlusseinrichtung 260 weist an ihrem Ende eine Markierung 7 in Form eines Spalts zwischen dem ersten Element 261 und dem zweiten Element 262 auf. Anhand der Markierung kann erkannt werden, ob die beiden Elemente 261 und 262 bereits durch Verkeilen verbunden sind. Im Fall eines Drucktanks kann anhand der Markierung 7 erkannt werden, ob der Drucktank bereits mit einem Prüfdruck beaufschlagt wurde. Die Markierung 7 zeigt an, ob eine Selbsthemmung zwischen den beiden Elementen 261 und 262 eingetreten ist.

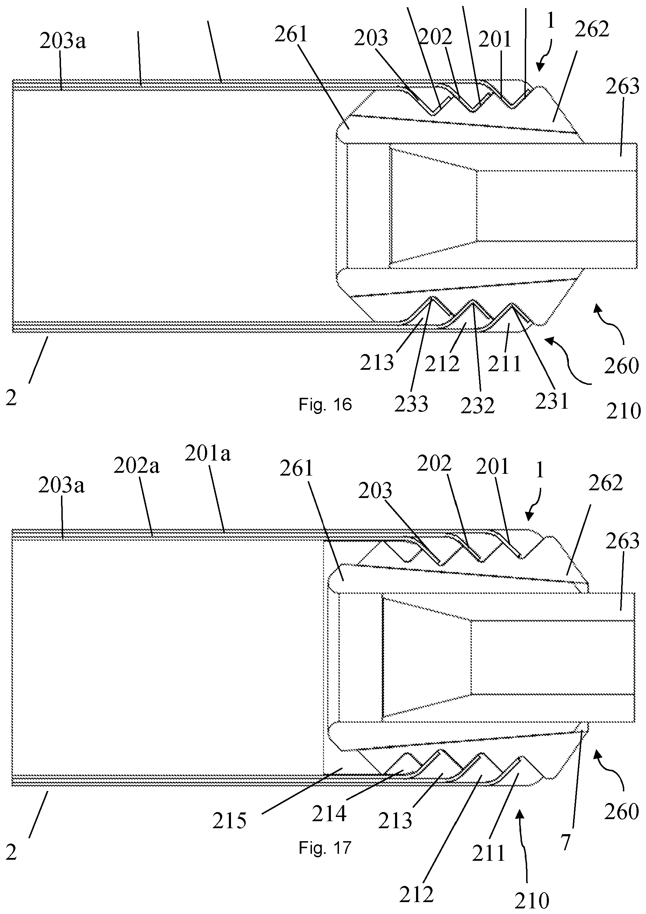

In Figur 16 ist die Abschlussvorrichtung 1 aus Figur 15 im verkeilten Zustand dargestellt. Gleiche Merkmale sind mit gleichen Bezugsziffern bezeichnet.

In Figur 17 ist eine weitere Ausgestaltung der Abschlussvorrichtung 1 im nicht verkeilten Zustand dargestellt. Gleiche Merkmale sind mit gleichen Bezugszeichen bezeichnet. Im Unterschied zu der Ausgestaltung der Abschlussvorrichtung aus Figur 11 weist die Ausführungsform aus Figur 17 ein zusätzliches weiteres Faserumlenkelement 214 an dem Verbindungsabschnitt 210 auf. Es ist in Fortsetzung der Reihe der Faserumlenkelemente 211, 212 und 213 in Richtung von dem freien Ende des Verbindungsabschnitts 210 weg angeordnet. Es unterscheidet sich von den andern Faserumlenkelementen 211, 212 und 213 jedoch dadurch, dass in ihm keine Langfasern 201a, 202a und 203a eingebettet sind, mit denen der Verbindungsabschnitt 210 mit der Anschlusseinrichtung 260 verbunden ist. Jedoch sind in dem Faserumlenkelement 214 in dem Fall, dass der Verbindungsabschnitt 210 rohrförmig ausgeführt ist, in Umfangsrichtung Fasern eingebettet, um zu ermöglichen, dass das Faserumlenkelement Kräfte aus der Umlenkung der Langfasern 203a besser aufnehmen kann. Die Kräfte aus den Langfasern werden durch die Ringform in Umfangskräfte umgewandelt. Die Festigkeit der Verbindung wird dadurch erhöht.

Der Verbindungsabschnitt 210 besitzt zusätzlich eine Stützlage 215 zwischen dem Faserumlenkelement 214 und der Faserlage 203a. Diese Stützlage 215 erstreckt sich von dem freien Ende des Verbindungsabschnitts 210 weg über das zusätzliche Faserumlenkelement 214 hinaus. Die Stützlage 215 vergleichmäßigt weiter die Spannung in dem Verbindungsabschnitt 210, sodass dieser bei unwesentlich höherem Materialaufwand für die Stützlage 215 belastbarer ist.

In Figur 18 ist die Abschlussvorrichtung 1 aus Figur 17 im verkeilten Zustand dargestellt. Gleiche Merkmale sind mit gleichen Bezugszeichen bezeichnet.

In den Figuren 19 und 20 ist der Verbindungsabschnitt 210 der Abschlussvorrichtung 1 aus den Figuren 17 und 18 dargestellt. Gleiche Merkmale sind mit gleichen Bezugszeichen bezeichnet.

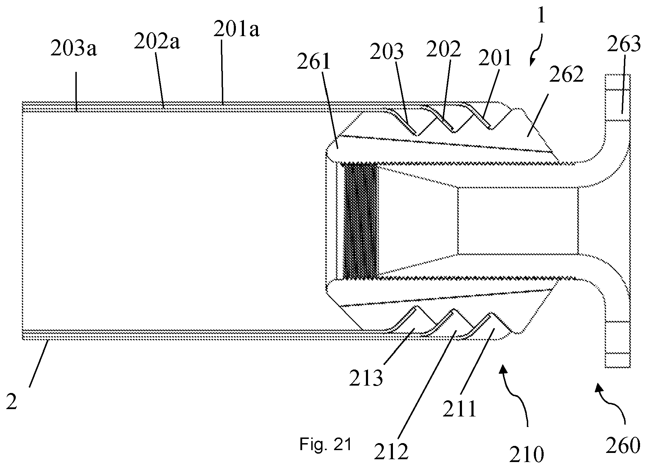

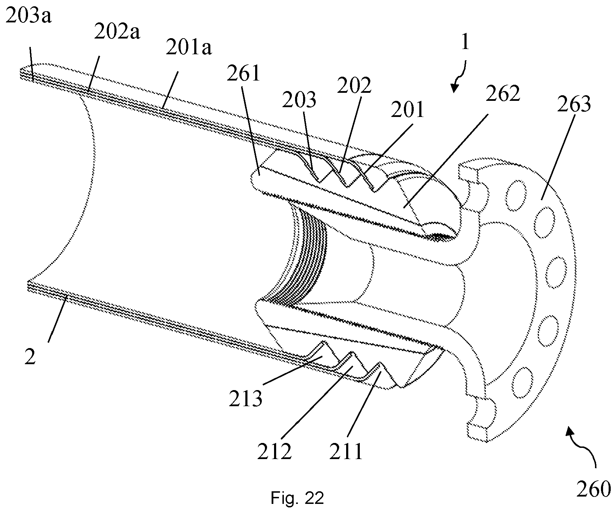

In den Figuren 21 und 22 ist eine weitere Ausgestaltung der Abschlussvorrichtung 1 dargestellt. Die Abschlussvorrichtung weist einen Verbindungsabschnitt 210, der nach einem der vorangegangenen Ausführungsformen ausgestaltet sein kann und eine Anschlusseinrichtung 260 auf. Durch den Verbindungsabschnitt 210 mit den Faserumlenkelementen 211, 212 und 213 wird die Faserverbundwerkstoffstruktur 2 mit der Anschlusseinrichtung 260 verbunden. Die Langfasern 201a, 202a und 203a verlaufen außerdem mit einem Abschnitt an den benachbarten Faserumlenkelementen 211, 212 und 213, wobei die Abschnitte der Langfasern 201, 202 und 203 an den Faserumlenkelementen 211, 212 und 213 ihre Richtung ändern.

Die Anschlusseinrichtung 260 umfasst ein erstes Element 261 und ein zweites Element 262, wobei das zweite Element 262 an seinem Außenumfang einen Kontaktbereich mit der Faserverbundwerkstoffstruktur 2 und an seinem Innenumfang einen Kontaktbereich mit dem ersten Element 261 aufweist, wobei jedes der Elemente 261, 262 im Kontaktbereich zum jeweils anderen Element 262, 261 eine konische Form aufweist. Das zweite Element 262 ist zu der zu dem Verbindungsabschnitt 210 gerichteten Außenoberfläche formkomplementär. Durch die konische Form der beiden sich nach dem Aufbringen des Faserverbundwerkstoffes in Kontakt befindlichen Flächen der beiden Elemente 261 und 262 der Anschlusseinrichtung 260 erfolgt beim relativen axialen Verschieben der Elemente 261 und 262 zueinander eine Verkeilung, durch die die beiden Elemente 261 und 262 der Anschlusseinrichtung 260 eine radiale Vorspannung im Faserverbundwerkstoff erzeugen. Durch diese radiale Vorspannung wird die notwendige relative Bewegung von Anschlusseinrichtung 260 und Faserverbundwerkstoffstruktur 2 bei der Belastung der Faserverbundwerkstoffstruktur 2 reduziert. Durch das konische Verkeilen der Elemente wird eine radiale Vorspannung der Umfangslagen des Faserverbundwerkstoffs im Bereich der Lasteinleitung erzeugt. Diese Vorspannung führt zu einer Verpressung der Langfasern 201a, 202a, 203a in den V-förmigen Vertiefungen der Anschlusseinrichtung 260 zwischen den Umfangslagen und dem zweiten Element 262, ohne dass eine Belastung vorliegen muss. Durch die Verpressung wird beim Aufbringen der Belastung die relative Verschiebung der Anschlusseinrichtung 260 und der Faserverbundwerkstoffstruktur 2 in den Flanken der V-förmigen Vertiefungen der Anschlusseinrichtung minimiert. Das Verkeilen der beiden Elemente 261 und 262 kann dabei im Fall eines Drucktanks durch den Innendruck des Drucktanks erreicht werden. In das erste Element 261 ist ein drittes Element 263 über ein Gewinde eingeschraubt. Dieses dritte Element 263 ist als Flansch ausgestaltet.

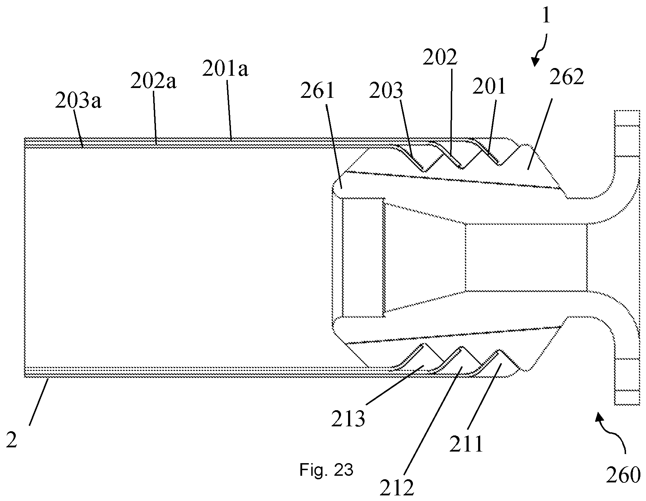

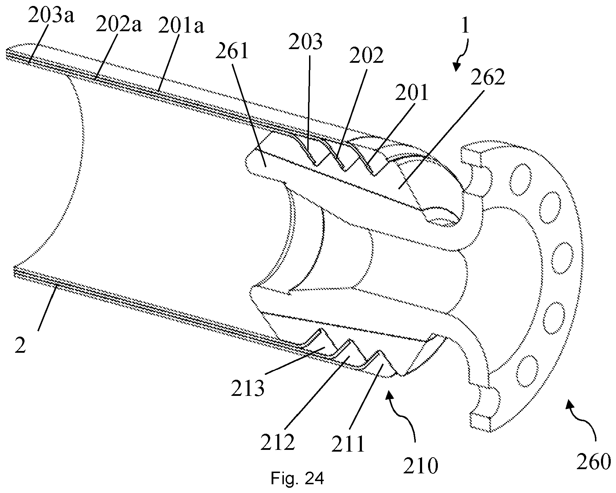

In den Figuren 23 und 24 ist eine weitere Ausgestaltung der Abschlussvorrichtung 1 im verkeilten Zustand dargestellt. Die Abschlussvorrichtung weist einen Verbindungsabschnitt 210, der nach einem der vorangegangenen Ausführungsformen ausgestaltet sein kann und eine Anschlusseinrichtung 260 auf.

Durch den Verbindungsabschnitt 210 mit den Faserumlenkelementen 211, 212 und 213 wird die Faserverbundwerkstoffstruktur 2 mit der Anschlusseinrichtung 260 verbunden. Die Langfasern 201a, 202a und 203a verlaufen außerdem mit einem Abschnitt an den benachbarten Faserumlenkelementen 211, 212 und 213, wobei die Abschnitte der Langfasern 201, 202 und 203 an den Faserumlenkelementen 211, 212 und 213 ihre Richtung ändern.

Die Anschlusseinrichtung 260 umfasst ein erstes Element 261 und ein zweites Element 262, wobei das zweite Element 262 an seinem Außenumfang einen Kontaktbereich mit der Faserverbundwerkstoffstruktur 2 und an seinem Innenumfang einen Kontaktbereich mit dem ersten Element 261 aufweist, wobei jedes der Elemente 261, 262 im Kontaktbereich zum jeweils anderen Element 262, 261 eine konische Form aufweist. Das zweite Element 262 ist zu der zu dem Verbindungsabschnitt 210 gerichteten Außenoberfläche formkomplementär. Durch die konische Form der beiden sich nach dem Aufbringen des Faserverbundwerkstoffes in Kontakt befindlichen Flächen der beiden Elemente 261 und 262 der Anschlusseinrichtung 260 erfolgt beim relativen axialen Verschieben der Elemente 261 und 262 zueinander eine Verkeilung derselben, durch die die beiden Elemente 261 und 262 der Anschlusseinrichtung 260 eine radiale Vorspannung im Faserverbundwerkstoff erzeugen. Durch diese radiale Vorspannung wird die notwendige relative Bewegung von Anschlusseinrichtung 260 und Faserverbundwerkstoffstruktur 2 bei der Belastung der Faserverbundwerkstoffstruktur 2 reduziert. Durch das konische Verkeilen der Elemente wird eine radiale Vorspannung der Umfangslagen des Faserverbundwerkstoffs im Bereich der Lasteinleitung erzeugt. Diese Vorspannung führt zu einer Verpressung der Langfasern 201a, 202a, 203a in den V-förmigen Vertiefungen der Anschlusseinrichtung 260 zwischen den Umfangslagen und dem zweiten Element 262, ohne dass eine Belastung vorliegen muss. Durch die Verpressung wird beim Aufbringen der Belastung die relative Verschiebung der Anschlusseinrichtung 260 und der Faserverbundwerkstoffstruktur 2 in den Flanken der V-förmigen Vertiefungen der Anschlusseinrichtung minimiert. Das Verkeilen der beiden Elemente 261 und 262 kann dabei im Fall eines Drucktanks durch den Innendruck des Drucktanks erreicht werden. Das erste Element 261 ist als Flansch ausgestaltet.

## Patentansprüche

1. Abschlussvorrichtung (1) einer Faserverbundwerkstoffstruktur (2), wobei die Abschlussvorrichtung (1) einen Faserverbundwerkstoff-Verbindungsabschnitt (210) zur Verbindung einer rohrförmigen Faserverbundwerkstoffstruktur (2) mit einer Anschlusseinrichtung (260) der Abschlussvorrichtung (1) aufweist, wobei der Verbindungsabschnitt (210) in seinem Inneren wenigstens ein Faserumlenkelement (211, 212, 213) aufweist, wobei der Verlauf der Langfasern (201a, 202a, 203a) aus der Faserverbundwerkstoffstruktur (2) der Form eines Faserumlenkabschnitts des wenigsten einen Faserumlenkelements (211, 212, 213) folgt, sodass deren Faserrichtung an dem Faserumlenkabschnitt umgelenkt ist, und wobei die Langfasern (201a, 202a, 203a) das Faserumlenkelement (211, 212, 213), dem sie jeweils zugeordnet sind, nicht vollständig umschlingen, wobei das wenigstens eine Faserumlenkelement (211, 212, 213) aus Faserverbundwerkstoff besteht, wobei die Anschlusseinrichtung (260) ein erstes Element (261) und ein zweites Element (262) aufweist, wobei das zweite Element (262) an seinem Außenumfang einen Kontaktbereich mit der Faserverbundwerkstoffstruktur (2) und an seinem Innenumfang einen Kontaktbereich mit dem ersten Element (261) aufweist, wobei jedes der Elemente (261, 262) im Kontaktbereich zu dem jeweils anderen Element (262, 261) eine konische Form aufweist.

2. Abschlussvorrichtung (1) gemäß Anspruch 1, **dadurch gekennzeichnet, dass** das erste Element (261) und das zweite Element (262) durch Selbsthemmung verbindbar sind.

3. Abschlussvorrichtung (1) gemäß Anspruch 1 oder 2, **dadurch gekennzeichnet, dass** die beiden Elemente (261, 262) im Kontaktbereich der beiden Elemente (261, 262) ein konisches Gewinde aufweisen.

4. Abschlussvorrichtung (1) gemäß einem der vorangegangenen Ansprüche, **dadurch gekennzeichnet, dass** die Faserverbundwerkstoffstruktur (2) einen Liner (6) aufweist, wobei der Liner (6) zumindest teilweise zwischen der Faserverbundwerkstoffstruktur (2) und mindestens einem Element (261, 262) angeordnet ist.

5. Abschlussvorrichtung (1) gemäß einem der vorangegangenen Ansprüche, **dadurch gekennzeichnet, dass** der nicht verkeilte Zustand der beiden Elemente (261, 262) durch eine Markierung (7) sichtbar ist.

6. Abschlussvorrichtung (1) gemäß einem der vorangegangenen Ansprüche, **dadurch gekennzeichnet, dass** die Abschlussvorrichtung (1) einen Dichtungsring (8) aufweist.

7. Abschlussvorrichtung (1) gemäß einem der vorangegangenen Ansprüche, **dadurch gekennzeichnet, dass** die Anschlusseinrichtung (260) ein drittes Element (263) aufweist, wobei das dritte Element (263) lösbar mit dem ersten Element (261) verbindbar ist.

8. Abschlussvorrichtung (1) gemäß Anspruch 7, **dadurch gekennzeichnet, dass** das dritte Element (263) die Domkappe eines Drucktanks ist.

9. Abschlussvorrichtung (1) gemäß Anspruch 7, **dadurch gekennzeichnet, dass** das dritte Element (263) einen Flansch aufweist.

## Claims

1. An end fitting (1) of a fibre-reinforced composite structure (2), wherein the end fitting (1) comprises a fibre-reinforced composite connecting portion (210) for connecting a tubular fibre-reinforced composite structure (2) to a connector (260) of the end fitting (1), wherein the connecting portion (210) comprises in its interior at least one fibre deflection element (211, 212, 213), wherein the course of the long fibres (201a, 202a, 203a) from the fibre-reinforced composite structure (2) follows the shape of a fibre deflection portion of the at least one fibre deflection element (211, 212, 213) such that their fibre direction is deflected at the fibre deflection portion, wherein the long fibres (201a, 202a, 203a) do not completely wrap around the fibre deflection element (211, 212, 213) to which they are respectively assigned, and wherein the at least one fibre deflection element (211, 212, 213) consists of fibre-reinforced composite material, **characterised in that** the connector (260) comprises a first element (261) and a second element (262), wherein the second element (262) has, at its outer circumference, a contact region with the fibre-reinforced composite structure (2) and, at its inner circumference, a contact region with the first element (261), wherein each of the elements (261, 262) has a conical shape in the contact region with the respective other element (262, 261).

2. The end fitting (1) according to claim 1, **characterised in that** the first element (261) and the second element (262) can be connected by self-locking.

3. The end fitting (1) according to claim 1 or 2, **characterised in that** the two elements (261, 262) have a tapered thread in the contact region of the two elements (261, 262).

4. The end fitting (1) according to any one of the preceding claims, **characterised in that** the fibre-reinforced composite structure (2) comprises a liner (6), wherein the liner (6) is arranged at least partially between the fibre-reinforced composite structure (2) and at least one element (261, 262).

5. The end fitting (1) according to any one of the preceding claims, **characterised in that** the non-wedged state of the two elements (261, 262) is visible by means of a marking (7).

6. The end fitting (1) according to any one of the preceding claims, **characterised in that** the end fitting (1) comprises a sealing ring (8).

7. The end fitting (1) according to any one of the preceding claims, **characterised in that** the connector (260) comprises a third element (263), wherein the third element (263) can be detachably connected to the first element (261).

8. The end fitting (1) according to claim 7, **characterised in that** the third element (263) is the dome cap of a pressure tank.

9. The end fitting (1) according to claim 7, **characterised in that** the third element (263) comprises a flange.

## Revendications

1. Dispositif de terminaison (1) d'une structure en matériau composite renforcé de fibres (2),
le dispositif de terminaison (1) présentant une section de liaison en matériau composite renforcé de fibres (210) pour relier une structure tubulaire en matériau composite renforcé de fibres (2) à un dispositif de raccordement (260) du dispositif de terminaison (1),
la section de liaison (210) présentant à l'intérieur de celle-ci au moins un élément de déviation de fibres (211, 212, 213),
le parcours des fibres longues (201a, 202a, 203a) issues de la structure en matériau composite renforcé de fibres (2) suivant la forme d'une section de déviation de fibres dudit au moins un élément de déviation de fibres (211, 212, 213), de sorte que leur direction de fibres est déviée au niveau de la section de déviation de fibres, et
les fibres longues (201a, 202a, 203a) n'enveloppant pas complètement l'élément de déviation de fibres (211, 212, 213) auquel elles sont respectivement associées,
ledit au moins un élément de déviation de fibres (211, 212, 213) étant constitué de matériau composite renforcé de fibres,
le dispositif de raccordement (260) présentant un premier élément (261) et un deuxième élément (262), le deuxième élément (262) présentant, sur sa périphérie extérieure, une zone de contact avec la structure en matériau composite renforcé de fibres (2) et, sur sa périphérie intérieure, une zone de contact avec le premier élément (261), chacun des éléments (261, 262) présentant, dans la zone de contact avec l'autre élément (262, 261), une forme conique.

2. Dispositif de terminaison (1) selon la revendication 1, **caractérisé en ce que** le premier élément (261) et le deuxième élément (262) peuvent être reliés par autoblocage.

3. Dispositif de terminaison (1) selon la revendication 1 ou 2, **caractérisé en ce que** les deux éléments (261, 262) présentent un filetage conique dans la zone de contact des deux éléments (261, 262).

4. Dispositif de terminaison (1) selon l'une des revendications précédentes, **caractérisé en ce que** la structure en matériau composite renforcé de fibres (2) présente un liner (6), le liner (6) étant disposé au moins en partie entre la structure en matériau composite renforcé de fibres (2) et au moins un élément (261, 262).

5. Dispositif de terminaison (1) selon l'une des revendications précédentes, **caractérisé en ce que** l'état non coincé des deux éléments (261, 262) est visible par un marquage (7).

6. Dispositif de terminaison (1) selon l'une des revendications précédentes, **caractérisé en ce que** le dispositif de terminaison (1) présente un joint d'étanchéité annulaire (8).

7. Dispositif de terminaison (1) selon l'une des revendications précédentes, **caractérisé en ce que** le dispositif de raccordement (260) présente un troisième élément (263), le troisième élément (263) pouvant être relié de manière détachable au premier élément (261).

8. Dispositif de terminaison (1) selon la revendication 7, **caractérisé en ce que** le troisième élément (263) est la calotte en forme de dôme d'un réservoir sous pression.

9. Dispositif de terminaison (1) selon la revendication 7, **caractérisé en ce que** le troisième élément (263) présente une bride.
